# EUROPEAN PATENT APPLICATION

(11) **EP 4 227 909 A1**
(43) Date of publication of application: **16.08.2023**
(21) Application number: 23155985.7
(22) Date of filing: 10.02.2023
(51) Int. Cl.: G06V 10/80, G06V 20/58, G06V 10/82

(54) **INFRARED SENSING DATA-ASSISTED CLASSIFICATION OF VULNERABLE ROAD USERS**

(30) Priority: 10.02.2022 US 202217669215
(71) Applicant: Waymo LLC, Mountain View, CA 94043 (US)
(72) Inventor: CHEN, Xu, Mountain View, CA 94043 (US); CHEN, Chao-Yeh, Mountain View, CA 94043 (US); ZHENG, Justin Yu, Mountain View, CA 94043 (US); XU, Zhinan, Mountain View, CA 94043 (US)
(74) Representative: Chettle, John Edward

(57) **Abstract**

The described aspects and implementations enable efficient calibration of a sensing system of a vehicle. In one implementation, disclosed is a method and a system to perform the method, the system including the sensing system configured to collect sensing data, characterizing an environment of the vehicle, the sensing data including infrared sensing data. The system further includes a data processing system operatively coupled to the sensing system and configured to process the sensing data using a classifier machine-learning model to obtain a classification of one or more vulnerable road users present in the environment of the vehicle.

## Description

### TECHNICAL FIELD

The instant specification generally relates to autonomous vehicles and vehicles deploying driver assistance systems. More specifically, the instant specification relates to improving autonomous driving systems and driver assistance systems using machine learning for efficient detection and classification of pedestrians, bicyclists, domestic animals, and various other vulnerable road users encountered in driving environments.

### BACKGROUND

An autonomous (fully or partially self-driving) vehicle (AV) operates by sensing an outside environment with various electromagnetic (e.g., radar and optical) and non-electromagnetic (e.g., audio and humidity) sensors. Some autonomous vehicles chart a driving path through the environment based on the sensed data. The driving path can be determined based on Global Navigation Satellite System (GNSS) data and road map data. While the GNSS and the road map data can provide information about static aspects of the environment (buildings, street layouts, road closures, etc.), dynamic information (such as information about other vehicles, pedestrians, street lights, etc.) is obtained from contemporaneously collected sensing data. Precision and safety of the driving path and of the speed regime selected by the autonomous vehicle depend on timely and accurate identification of various objects present in the driving environment and on the ability of a driving algorithm to process the information about the environment and to provide correct instructions to the vehicle controls and the drivetrain.

### BRIEF DESCRIPTION OF THE DRAWINGS

The present disclosure is illustrated by way of examples, and not by way of limitation, and can be more fully understood with references to the following detailed description when considered in connection with the figures, in which:
**FIG. 1** is a diagram illustrating components of an example autonomous vehicle (AV) capable of fast and reliable detection, classification, and tracking of vulnerable road users (VRUs) during driving missions of the AV, in accordance with some implementations of the present disclosure.
**FIG. 2** is a diagram illustrating example architecture of a part of a perception system of an autonomous vehicle that is capable of using sensing data for fast and efficient detection, classification, and tracking of VRUs, in accordance with some implementations of the present disclosure.
**FIG. 3** is a schematic diagram illustrating example operations of an infrared-assisted classifier that uses one or more machine-learning models for fast and accurate classification of VRUs, in accordance with some implementations of the present disclosure.
**FIG. 4** is a schematic illustration of a change in a relative position of a sensor and a reference point during calibration of sensors of an autonomous vehicle, in accordance with some implementations of the present disclosure.
**FIG. 5** illustrates an example method of infrared-assisted detection, classification, and tracking of VRUs, in accordance with some implementations of the present disclosure.
**FIG. 6** depicts a block diagram of an example computer device 600 capable of enabling infrared-assisted detection, classification, and tracking of VRUs, in accordance with some implementations of the present disclosure.

### SUMMARY

In one implementation, disclosed is a system that includes a sensing system of a vehicle, the sensing system configured to: obtain a first sensing data characterizing an environment of the vehicle, wherein the first sensing data includes at least one of a lidar sensing data, a radar sensing data, or an optical range camera sensing data; and obtain a second sensing data characterizing the environment of the vehicle, wherein the second sensing data includes an infrared camera sensing data. The disclosed system further includes a perception system of the vehicle, the perception system configured to process the first sensing data and the second sensing data using a classifier machine-learning model (MLM) to obtain a classification of one or more vulnerable road users (VRUs) present in the environment of the vehicle; and cause a driving path of the vehicle to be modified in view of the obtained classification of the one or more VRUs.

In another implementation, disclosed is a sensing system of an autonomous vehicle (AV), the sensing system configured to obtain a first image of an environment of the AV, wherein the first image includes at least one of a lidar image a radar image, or an optical range camera image; and obtain a second image characterizing the environment of the AV, wherein the second image includes an infrared camera sensing image. The disclosed system further includes a perception system of the AV. The perception system includes a detector MLM configured to identify, based on at least one of the first image or the second image, a first candidate object and a second candidate object within the environment of the AV. The perception system further includes a classifier MLM configured to process at least a part of the first image and at least a part of the second image to determine that the first candidate object is a VRU in the environment of the AV and that the second candidate object is a non-VRU.

In another implementation, disclosed is a method that includes obtaining, using a sensing system of a vehicle, a first sensing data characterizing an environment of the vehicle, wherein the first sensing data includes at least one of a lidar sensing data, a radar sensing data, or an optical range camera sensing data; obtaining, using the sensing system of the vehicle, a second sensing data characterizing the environment of the vehicle, wherein the second sensing data includes an infrared camera sensing data; processing, by a processing device, the first sensing data and the second sensing data using a classifier MLM; obtaining, using an output of the classifier MLM, a classification of one or more VRUs present in the environment of the vehicle; and causing, by the processing device, a driving path of the vehicle to be modified in view of the obtained classification of the one or more VRUs.

### DETAILED DESCRIPTION

For the safety of autonomous driving operations, it is desirable to develop and deploy techniques of fast and accurate detection, classification, and tracking of various objects, such as vehicles, pedestrians, road obstacles, construction equipment, domestic and wild animals, and the like. An autonomous vehicle (as well as various driver assistance systems) can take advantage of a number of sensors to facilitate detection of objects in a driving environment and determine the motion of such objects. The sensors typically include radio detection and ranging sensors (radars), light detection and ranging sensors (lidars), multiple digital cameras, sonars, positional sensors, and the like. Different types of sensors provide different and often complementary benefits. For example, radars and lidars emit electromagnetic signals (radio signals or optical signals) that reflect from the objects and carry information allowing to determine distances to the objects (e.g., from the time of flight of the signals) and velocities of the objects (e.g., from the Doppler shift of the frequencies of the signals). Radars and lidars can cover an entire 360-degree view, e.g., by using a scanning transmitter of sensing beams. Sensing beams can cause numerous reflections covering the driving environment in a dense grid of return points. Each return point can be associated with the distance to the corresponding reflecting object and a radial velocity (a component of the velocity along the line of sight) of the reflecting object.

Lidars and radars have different advantages. Lidars, by virtue of a significantly smaller wavelength, have a higher spatial resolution, which allows obtaining many closely-spaced return points from the same object. Lidars, however, deploy expensive high-quality optical components that have to be carefully manufactured and maintained. Additionally, optical signals of lidars attenuate at distances of the order of several hundred meters and work less effectively in poor weather conditions. Radar sensors are inexpensive, require less maintenance than lidar sensors, have a large working range of distances, and possess a good tolerance of adverse environmental conditions, e.g., foggy, snowy, or misty driving conditions. Because of the low cost and complexity of radar sensors, multiple radar devices can be mounted on a vehicle and positioned at locations that collectively provide a wide field of view. Precision of radar returns, however, can be limited by a relatively long wavelength, as compared with the wavelength of light used in the optical lidar technology. Both radars and lidars are capable of providing a three dimensional view of the environment.

A camera (e.g., a photographic or video camera) allows high-resolution imaging of objects at both shorter and longer distances, but provides a projection of the three-dimensional space onto a two-dimensional image plane (or a non-planar imaging surface). As a result, the resolution of lateral coordinates of objects can be different (e.g., higher) than the resolution of radial distances to the same objects (with radial distances being estimated from, e.g., a focal length of the camera that provides the maximum sharpness of the images of objects).

With various sensors providing different benefits, an autonomous vehicle sensing system typically deploys sensors of multiple types, leveraging each sensor's advantages to obtain a more complete picture of the driving environment. For example, a lidar can accurately determine a distance to an object and the radial velocity of the object whereas a camera, upon acquiring a time series of images, can determine the lateral velocity of the object. Consequently, a reliable detection and tracking of many objects can be achieved in diverse situations of practical significance. Certain objects, however, can sometimes be difficult to detect. A pedestrian about to step on the roadway can be partially occluded by a parked vehicle and the visible part of the pedestrian can be insufficient for a reliable detection by the AV sensors. Certain conditions further complicate object sensing and classification. For example, scattering of light by particles of fog can reduce sharpness and resolution of lidar and camera images significantly. Radar imaging is less susceptible to foggy conditions but has intrinsically lower resolution. As a result, while reliably detecting a presence of some object, a radar can be less reliable in identifying a specific type of an object (e.g., in distinguishing a pedestrian from a parking fee kiosk). At nighttime, various camera sensors operating by detecting light reflected by the objects can similarly have a reduced sensitivity. As a result, timely detection and classification of various road users that are most vulnerable due to lacking protection by a vehicle body, e.g., pedestrians, bicyclists, motorcyclists, golf cart users, all-terrain vehicle users, domestic animals, etc., can often be challenging.

Aspects and implementations of the present disclosure address these and other shortcomings of the existing detection technology by enabling methods and systems that facilitate fast and reliable detection, classification, and tracking of vulnerable road users (VRUs) in driver-assistance and autonomous driving systems. Described implementations take advantage of infrared (IR) cameras that detect light with wavelengths that are longer than the optical wavelengths used by conventional cameras and lidars but shorter than the wavelengths used by radars. A pedestrian, unless equipped with light-emitting devices (e.g., a flashlight), can reflect external incident light but cannot emit light in the optical range. In contrast, living beings having a temperature substantially different (e.g., higher) from the temperature of the surrounding objects (or embedded in a medium, e.g. air, that has a low density and IR emissivity) can emit IR radiation that can be captured by IR cameras or other IR sensors. An IR image of the environment can lack the high resolution of lidar or camera sensors but can be more robust under various sub-optimal weather and lighting conditions described above. Additionally, IR emissions of exposed VRUs are naturally unscreened by vehicle metallic walls and glass windows, unlike IR emissions of more protected drivers and passengers of cars, trucks, buses, etc. In some implementations, IR images can be used together with complementary camera, lidar, or radar images of the same scenery, for the enhanced ability to correctly classify various VRUs. A trained machine-learning model (MLM) can use IR images as one input and various other images (e.g., optical range camera images, lidar images, radar images, etc.) as additional inputs and can output classifications of possible VRUs with the accuracy that is significantly higher (in terms of the precision and recall) than the accuracy achieved by conventional classifiers. In some implementations, the MLM has an architecture that has memory neural connections (e.g., a recurrent neural network) trained to process a pipeline of sensing data for dynamic classification of moving VRUs.

Advantages of the described implementations include but are not limited to fast, reliable, and accurate classification and tracking of various VRUs during driving missions. Described implementations can operate in a significantly more efficient way than the existing computer vision technology and can be especially advantageous in situations of decreased visibility, adverse weather conditional, as well as in the instances where VRUs are partially obscured by other objects.

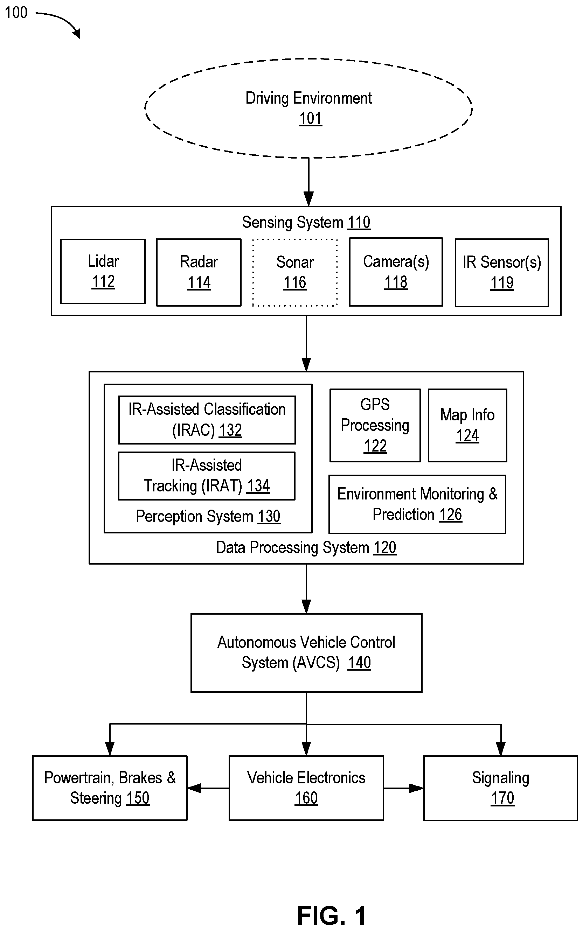

**FIG. 1** is a diagram illustrating components of an example autonomous vehicle (AV) 100 capable of fast and reliable detection, classification, and tracking of vulnerable road users during driving missions of the AV, in accordance with some implementations of the present disclosure. Autonomous vehicles can include motor vehicles (cars, trucks, buses, motorcycles, all-terrain vehicles, recreational vehicles, any specialized farming or construction vehicles, and the like), aircraft (planes, helicopters, drones, and the like), naval vehicles (ships, boats, yachts, submarines, and the like), spacecraft (controllable objects operating outside Earth atmosphere) or any other self-propelled vehicles (e.g., robots, factory or warehouse robotic vehicles, sidewalk delivery robotic vehicles, etc.) capable of being operated in a self-driving mode (without a human input or with a reduced human input).

Vehicles, such as those described herein, may be configured to operate in one or more different driving modes. For instance, in a manual driving mode, a driver may directly control acceleration, deceleration, and steering via inputs such as an accelerator pedal, a brake pedal, a steering wheel, etc. A vehicle may also operate in one or more autonomous driving modes including, for example, a semi or partially autonomous driving mode in which a person exercises some amount of direct or remote control over driving operations, or a fully autonomous driving mode in which the vehicle handles the driving operations without direct or remote control by a person. These vehicles may be known by different names including, for example, autonomously driven vehicles, self-driving vehicles, and so on.

As described herein, in a semi-autonomous or partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods may be described below in conjunction with autonomous vehicles, similar techniques can be used in various driver assistance systems that do not rise to the level of fully autonomous driving systems. In the United States, the Society of Automotive Engineers (SAE) have defined different levels of automated driving operations to indicate how much, or how little, a vehicle controls the driving, although different organizations, in the United States or in other countries, may categorize the levels differently. More specifically, disclosed systems and methods can be used in SAE Level 2 driver assistance systems that implement steering, braking, acceleration, lane centering, adaptive cruise control, etc., as well as other driver support. The disclosed systems and methods can be used in SAE Level 3 driving assistance systems capable of autonomous driving under limited (e.g., highway) conditions. Likewise, the disclosed systems and methods can be used in vehicles that use SAE Level 4 self-driving systems that operate autonomously under most regular driving situations and require only occasional attention of the human operator. In all such driving assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

A driving environment 101 can include any objects (animate or inanimate) located outside the AV, such as roadways, buildings, trees, bushes, sidewalks, bridges, mountains, other vehicles, pedestrians, piers, banks, landing strips, animals, birds, and so on. The driving environment 101 can be urban, suburban, rural, and so on. In some implementations, the driving environment 101 can be an off-road environment (e.g. farming or other agricultural land). In some implementations, the driving environment can be an indoor environment, e.g., the environment of an industrial plant, a shipping warehouse, a hazardous area of a building, and so on. In some implementations, the driving environment 101 can be substantially flat, with various objects moving parallel to a surface (e.g., parallel to the surface of Earth). In other implementations, the driving environment can be three-dimensional and can include objects that are capable of moving along all three directions (e.g., balloons, falling leaves, etc.). Hereinafter, the term "driving environment" should be understood to include all environments in which an autonomous motion (e.g., SAE Level 5 and SAE Level 4 systems), conditional autonomous motion (e.g., SAE Level 3 systems), and/or motion of vehicles equipped with driver assistance technology (e.g., SAE Level 2 systems) can occur. Additionally, "driving environment" can include any possible flying environment of an aircraft (or spacecraft) or a marine environment of a naval vessel. The objects of the driving environment 101 can be located at any distance from the AV, from close distances of several feet (or less) to several miles (or more).

The example AV 100 can include a sensing system 110. The sensing system 110 can include various electromagnetic (e.g., optical, infrared, radio wave, etc.) and non-electromagnetic (e.g., acoustic) sensing subsystems and/or devices. The sensing system 110 can include one or more lidars 112, which can be a laser-based unit capable of determining distances to the objects and velocities of the objects in the driving environment 101. The sensing system 110 can include one or more radars 114, which can be any system that utilizes radio or microwave frequency signals to sense objects within the driving environment 101 of the AV 100. The lidar(s) 112 and or radar(s) 114 can be configured to sense both the spatial locations of the objects (including their spatial dimensions) and velocities of the objects (e.g., using the Doppler shift technology). Hereinafter, "velocity" refers to both how fast the object is moving (the speed of the object) as well as the direction of the object's motion. Each of the lidar(s) 112 and radar(s) 114 can include a coherent sensor, such as a frequency-modulated continuous-wave (FMCW) lidar or radar sensor. For example, lidar(s) 112 and/or radar(s) 114 can use heterodyne detection for velocity determination. In some implementations, the functionality of a ToF and coherent lidar (or radar) is combined into a lidar (or radar) unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 and/or radar 114s can be mounted on AV 100.

Lidar 112 (and/or radar 114) can include one or more optical sources (and/or radio/microwave sources) producing and emitting signals and one or more detectors of the signals reflected back from the objects. In some implementations, lidar 112 and/or radar 114 can perform a 360-degree scanning in a horizontal direction. In some implementations, lidar 112 and/or radar 114 can be capable of spatial scanning along both the horizontal and vertical directions. In some implementations, the field of view can be up to 90 degrees in the vertical direction (e.g., with at least a part of the region above the horizon being scanned with lidar or radar signals). In some implementations (e.g., aerospace applications), the field of view can be a full sphere (consisting of two hemispheres).

The sensing system 110 can further include one or more cameras 118 to capture images of the driving environment 101. Cameras 118 can operate in the visible part of the electromagnetic spectrum, e.g., 300-800 nm range of wavelengths (herein also referred for brevity as the optical range). Some of the optical range cameras 118 can use a global shutter while other cameras 118 can use a rolling shutter. The images can be two-dimensional projections of the driving environment 101 (or parts of the driving environment 101) onto a projecting surface (flat or non-flat) of the camera(s). Some of the cameras 118 of the sensing system 110 can be video cameras configured to capture a continuous (or quasi-continuous) stream of images of the driving environment 101. The sensing system 110 can also include one or more sonars 116, for active sound probing of the driving environment 101, e.g., ultrasonic sonars, and one or more microphones for passive listening to the sounds of the driving environment 101. The sensing system 110 can also include one or more infrared range cameras 119 also referred herein as IR cameras 119. IR camera(s) 119 can use focusing optics (e.g., made of germanium-based materials, silicon-based materials, etc.) that is configured to operate in the range of wavelengths from microns to tens of microns or beyond. IR camera(s) 119 can include a phased array of IR detector elements. Pixels of IR images produced by camera(s) 119 can be representative of the total amount of IR radiation collected by a respective detector element (associated with the pixel), of the temperature of a physical object whose IR radiation is being collected by the respective detector element, or any other suitable physical quantity.

The sensing data obtained by the sensing system 110 can be processed by a data processing system 120 of AV 100. For example, the data processing system 120 can include a perception system 130. The perception system 130 can be configured to detect and track objects in the driving environment 101 and to recognize the detected objects. For example, the perception system 130 can analyze images captured by the cameras 118 and can be capable of detecting traffic light signals, road signs, roadway layouts (e.g., boundaries of traffic lanes, topologies of intersections, designations of parking places, and so on), presence of obstacles, and the like. The perception system 130 can further receive radar sensing data (Doppler data and ToF data) to determine distances to various objects in the environment 101 and velocities (radial and, in some implementations, transverse, as described below) of such objects. In some implementations, the perception system 130 can use radar data in combination with the data captured by the camera(s) 118, as described in more detail below.

The perception system 130 can include one or more modules to facilitate detection, classification, and tracking of VRUs, including an infrared-assisted classification module (IRAC) 132 that can be used to process data provided by the sensing system 110. More specifically, in some implementations, IRAC 132 can receive data from sensors of different sensing modalities. For example, IRAC 132 can receive images from at least some of lidar(s) 112, radar(s) 114, and (optical range) camera(s) 118, and use the received images in conjunction with images received from IR camera (s) 119. In particular, IRAC 132 can include one or more trained machine-learning models (MLMs) that are used to process some or all of the above images to classify various candidate objects depicted in the images as VRU or non-VRUs (e.g., various artifact objects and structures that resemble VRUs). IRAC 132 may use multiple classification heads to output probabilities that various candidate VRUs belong to a predefined set of VRU classes, such as an adult pedestrian, a child pedestrian, a bicyclist, a motorcyclist, a golf cart user, an electric scooter user, a horseback rider, an animal (e.g., a dog, an equine, etc.), and the like. In some implementations, IRAC 132 can further provide confidence levels representing estimates of the reliability of the output classifications/probabilities. Various models of IRAC 132 can be trained using multiple sets of images, annotated to identify specific features in the respective images depicting VRUs and non-VRUs encountered in various driving situations. In some implementations, the perception system 130 can include an IR-assisted tracking module (IRAT) 134 that monitors changing positions of detected VRU and further updates VRU classifications. For example, with time, the size of a visible portion of a candidate VRU can change (e.g., increase) and a more reliable classification of the candidate VRU (e.g., VRU vs. non-VRU, VRU class, etc.) can be obtained. Various filters, e.g., Kalman filters, can be applied by IRAT 134 to locations of detected VRU for more accurate determination of the trajectories of the detected VRUs.

The perception system 130 can further receive information from a Global Navigation Satellite System (GNSS) positioning subsystem (not shown in **FIG. 1**), which can include a GNNS transceiver (not shown), configured to obtain information about the position of the AV relative to Earth and its surroundings. The positioning subsystem can use the positioning data, e.g., GNNS and inertial measurement unit (IMU) data) in conjunction with the sensing data to help accurately determine the location of the AV with respect to fixed objects of the driving environment 101 (e.g. roadways, lane boundaries, intersections, sidewalks, crosswalks, road signs, curbs, surrounding buildings, etc.) whose locations can be provided by map information 124. In some implementations, the data processing system 120 can receive non-electromagnetic data, such as audio data (e.g., ultrasonic sensor data from sonar 116 or data from microphone picking up emergency vehicle sirens), temperature sensor data, humidity sensor data, pressure sensor data, meteorological data (e.g., wind speed and direction, precipitation data), and the like.

The data processing system 120 can further include an environment monitoring and prediction component 126, which can monitor how the driving environment 101 evolves with time, e.g., by keeping track of the locations and velocities of the animated objects (e.g., relative to Earth). In some implementations, the environment monitoring and prediction component 126 can keep track of the changing appearance of the environment due to a motion of the AV relative to the environment. In some implementations, the environment monitoring and prediction component 126 can make predictions about how various animated objects of the driving environment 101 will be positioned within a prediction time horizon. The predictions can be based on the current state of the animated objects, including current locations (coordinates) and velocities of the animated objects. Additionally, the predictions can be based on a history of motion (tracked dynamics) of the animated objects during a certain period of time that precedes the current moment. For example, based on stored data for a first object indicating accelerated motion of the first object during the previous 3-second period of time, the environment monitoring and prediction component 126 can conclude that the first object is resuming its motion from a stop sign or a red traffic light signal. Accordingly, the environment monitoring and prediction component 126 can predict, given the layout of the roadway and presence of other vehicles, where the first object is likely to be within the next 3 or 5 seconds of motion. As another example, based on stored data for a second object indicating decelerated motion of the second object during the previous 2-second period of time, the environment monitoring and prediction component 126 can conclude that the second object is stopping at a stop sign or at a red traffic light signal. Accordingly, the environment monitoring and prediction component 126 can predict where the second object is likely to be within the next 1 or 3 seconds. The environment monitoring and prediction component 126 can perform periodic checks of the accuracy of its predictions and modify the predictions based on new data obtained from the sensing system 110. The environment monitoring and prediction component 126 can operate in conjunction with IRAC 132 and/or IRAT 134. For example, the environment monitoring and prediction component 126 can track relative motion of the AV and various objects (e.g., reference objects that are stationary or moving relative to Earth); in some implementations.

The data generated by the perception system 130, the GNSS processing module 122, and the environment monitoring and prediction component 126 can be used by an autonomous driving system, such as AV control system (AVCS) 140. The AVCS 140 can include one or more algorithms that control how AV is to behave in various driving situations and environments. For example, the AVCS 140 can include a navigation system for determining a global driving route to a destination point. The AVCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The AVCS 140 can also include an obstacle avoidance system for safe avoidance of various obstructions (rocks, stalled vehicles, and so on) and VRUs (e.g., a jaywalking pedestrian, a deer, and so on) within the driving environment of the AV. The obstacle avoidance system can be configured to evaluate the size of the obstacles and classified VRUs and the trajectories of the obstacles (if obstacles are animated) and VRUs and select an optimal driving strategy (e.g., braking, steering, accelerating, etc.) for avoiding the obstacles.

Algorithms and modules of AVCS 140 can generate instructions for various systems and components of the vehicle, such as the powertrain, brakes, and steering 150, vehicle electronics 160, signaling 170, and other systems and components not explicitly shown in **FIG. 1**. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 are first delivered to the vehicle electronics 160, which generates commands to the powertrain, brakes, and steering 150 and/or signaling 170.

In one example, IRAC 132 can determine that a candidate VRU is partially obscured by a parked vehicle and can further classify the candidate VRU, with 70% probability, as a pedestrian. Responsive to the VRU determination/classification, the data processing system 120 can determine that the vehicle needs to slow down until a safe speed is reached. The AVCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; and (3) engage a brake unit to reduce (while acting in concert with the engine and the transmission) the vehicle's speed until the safe speed is reached. With time, the sensing system 110 can acquire an expanded view of the candidate VRU and IRAC 132 can determine that the candidate VRU is a pedestrian with 85% probability. Additionally, IRAT 134 can track the motion of the candidate VRU and can make an updated determination that the candidate VRU is about to step on the roadway from behind the parked car. Responsive to receiving the updated determination, the AVCS 140 can output instructions to the powertrain, brakes, and steering 150 to further increase the pressure on the brakes and to bring the AV to a stop or to perform, using a power steering mechanism, a steering maneuver until the pedestrian (or any other VRU) is safely bypassed. Subsequently, the AVCS 140 can output instructions to the powertrain, brakes, and steering 150 to resume the previous speed settings of the vehicle.

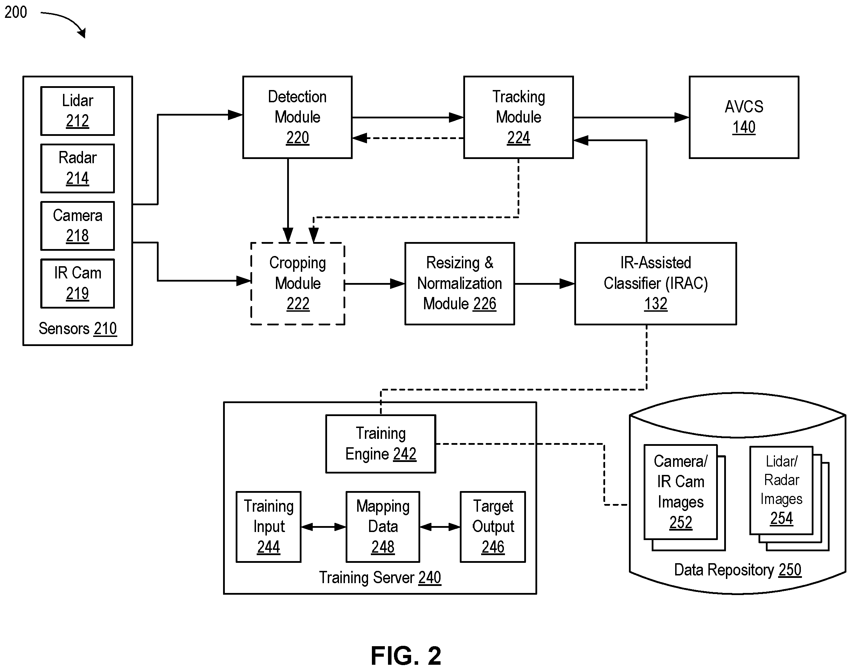

**FIG. 2** is a diagram illustrating example architecture 200 of a part of a perception system of an autonomous vehicle that is capable of using sensing data for fast and efficient detection, classification, and tracking of VRUs, in accordance with some implementations of the present disclosure. An input into the perception system (e.g., perception system 130 of **FIG. 1**) can include data obtained by various components of the sensing system 110, e.g., sensors 210, which may include lidar sensor(s) 212, radar sensor(s) 214, optical (e.g., visible) range camera(s) 218, and IR camera(s) 219. The data outputted by various sensors 210 can include directional data (e.g., angular coordinates of return points), distance data, and radial velocity data, e.g., as can be obtained by lidar sensor(s) 212 and/or radar sensor(s) 214. The data outputted by various sensors 210 can further include pixel data obtained by optical range camera(s) 218 and pixel data obtained by IR camera(s) 219. The data outputted by a particular sensor (e.g., lidar 212) in association with a particular instance of time is referred to herein as an image (e.g., a lidar image). A set of all available images (a lidar image, a radar image, a camera image, and/or an IR camera image, etc.) associated with a specific instance of time is referred to herein as a sensing frame. In some implementations, the images obtained by different sensors can be synchronized, so that all images in a given sensing frame have the same (up to an accuracy of synchronization) timestamp. In some implementations, some images in a given sensing frame can have (controlled) time offsets.

An image obtained by any of sensors can include a corresponding intensity map *I*({*xⱼ*}) where {*xⱼ*} can be any set of coordinates, including three-dimensional (spherical, cylindrical, Cartesian, etc.) coordinates (e.g., in the instances of lidar and/or radar images), or two-dimensional coordinates (in the instances of camera data). Coordinates of various objects (or surfaces of the objects) that reflect lidar and/or radar signals can be determined from directional data (e.g., polar *θ* and azimuthal *φ* angles in the direction of lidar/radar transmission) and distance data (e.g., radial distance *R* determined from the ToF of lidar/radar signals). The intensity map can identify intensity of sensing signals detected by the corresponding sensors. Similarly, lidar and/or radar sensors can produce Doppler (frequency shift) map, *Δf*({*xⱼ*} that identifies radial velocity of reflecting objects based on detected Doppler shift *Δf* of the frequency of the reflected radar signals, *V* = *λΔf*/2, where *λ* is the lidar/radar wavelength, with positive values *Δf* > 0 associated with objects that move towards the lidar/radar (and, therefore, the AV) and negative values *Δf* < 0 associated with objects that move away from the lidar/radar. In some implementations, e.g., in driving environments where objects are moving substantially within a specific plane (e.g., ground surface), the radar intensity map and the Doppler map can be defined using two-dimensional coordinates, such as the radial distance and azimuthal angle: *I*(*R*,*φ*), *Δf*(*R*, *φ*). Lidar and/or radar data can be identified with timestamps.

Camera(s) 218 can acquire one or more sequence of images, which can be similarly identified with timestamps. Each image can have pixels of various intensities of one color (for black-and-white images) or multiple colors (for color images). Images acquired by camera(s) 218 can be panoramic images or images depicting a specific portion of the driving environment, such as a large (e.g., panoramic) image segmented into smaller images or images acquired by limited-view cameras (e.g., frontal-view cameras, rear-view cameras, side-view cameras, etc.). Infrared camera(s) 219 can similarly output one or more sequences of IR images. Each IR image can be obtained by an array of infrared detectors, which can operate in the range of wavelengths from microns to tens of microns or beyond. The IR images can include intensity *I*({*xⱼ*}) representative of the total amount of IR radiation collected by a respective detector. In some implementations, the IR images can include a pseudo-color map *Cᵢ*({*xⱼ*}) in which the presence of a particular pseudo-color *Cᵢ* can be representative of the collected total intensity *I*({*xⱼ*}). In some implementations, the collected intensity *I*({*xⱼ*}) can be used to determine a temperature map *T*({*xⱼ*}) of the environment. Accordingly, in different implementations, different representations (e.g., intensity maps, pseudo-color maps, temperature maps, etc.) can be used to represent the outputted IR camera data.

In some implementations, sensors 210 can output portions of sensing frames in association with particular segments of the driving environment. For example, data generated by a frontal-view optical range camera can be bundled with data generated with a frontal-view IR camera and further bundled with a portion of lidar and/or radar data obtained by sensing beams transmitted within a certain (forward-looking) segment of lidar and/or radar scanning that corresponds to the field of view of the frontal view cameras. Similarly, side-view camera data can be bundled with lidar and/or radar data obtained by the sensing beams transmitted within a respective side-view segment of the lidar and/or radar scanning.

Example architecture 200 can include a detection module 220. Detection module 220 can process all, some, or a single data modality output by sensors 210 (e.g., only camera data or camera data and lidar data, etc.) to detect presence of various objects in the driving environment. For example, detection module 220 can identify clusters (blobs) of lidar/radar return points or clusters of optical range and/or IR camera pixels that are hypothesized to depict candidate VRUs. The clusters can be identified based on geometric proximity (e.g., similar lateral and/or radial distances), similar velocities, similar detection intensities, etc., or some combination thereof. The clusters can also be identified based on cluster shapes, sizes, speed of motions, and so on. For example, a cluster size can be consistent with that of a passenger car, a semi-trailer, a pedestrian, bicyclists, and so on. Detection module 220 can deploy one or more MLMs that can use lookup-tables, geometric shape mapping, mathematical formulas, decision-tree algorithms, support vector machines, deep neural networks, etc., or any combination thereof, to identify VRU candidates. Deep neural networks can include convolutional neural networks, recurrent neural networks (RNN) with one or more hidden layers, fully connected neural networks, long short-term memory neural networks, Boltzmann machines, and so on. In some implementations, detection module 220 can be trained to err on the side of overinclusion and tolerate a significant number of false positives to be later classified more accurately by IRAC 132.

Detection module 220 can process bundles of sensing data associated with different segments of the driving environment independently, e.g., in parallel or in a pipelined fashion, as determined by the direction of lidar scanning. For example, if the lidar scanning is in the counterclockwise direction, detection module 220 can first process data obtained by frontal-view sensors or sensing beams, then process the data obtained by left-facing sensors or sensing beams, the data obtained by rear-view sensors or sensing beams, and followed by the data obtained by right-facing sensors or sensing beams. The pipelined processing can then be repeated for each additional cycle of sensing data acquisition.

Candidate VRUs identified by detection module can be provided to an optional cropping module 222 and can further be provided to a tracking module 224. Tracking module 224 can be a part of IRAT 134 and can track motion of each of the candidate VRUs identified by detection module 220 with time (e.g., with each subsequent sensing frame). Tracking can include observing a disappearance of a previously identified candidate VRU from the driving environment or from a visible portion of the driving environment, splitting of a candidate VRU into two or more candidate VRUs, and so on. Cropping module 222 can crop one or more portions of sensing data of a given sensing frame before the cropped portion is processed by IRAC 132. For each candidate VRU, cropping module 222 can crop a portion of the sensing frame of a certain size, e.g., two, three, etc., times the largest dimension of the respective VRU. Each of the available data of different sensing modalities, e.g., lidar images, radar images, optical range camera images, IR camera images, etc., can be cropped similarly so that the cropped portions correspond to the same regions of the driving environment.

Before inputting cropped portions of the images into IRAC 132, the cropped portions can be preprocessed by a resizing and normalization module 226. Resizing and normalization module 226 can resize each cropped portion to match the size of an input into IRAC 132. For example, if IRAC 132 is configured to process inputs of dimension *n* × *m* while a cropped portion of a camera image has a size of *N* × *M* pixels, resizing and normalization module 226 can resize the cropped portion, e.g., downscale or upscale, depending on whether the cropped portion is larger or smaller than the size of IRAC 132 inputs. In some implementations, the rescaling is performed such that the aspect ratio of the cropped portion is preserved. For example, if the dimension of IRAC 132 inputs is 256 × 192 pixels, and the size of the cropped portion is 96 × 96 pixels, resizing and normalization module 226 can upscale the cropped portion using a rescaling factor 2, such that the resized portion has the size of is 192 × 192 pixels. Because the size of upscaled portion is less than the size of IRAC 132 inputs, the upscaled portion can then be padded to the size of 256 × 192 pixels, e.g., using padding pixels. The intensity of the padding pixels can be the average intensity of the pixels of the cropped portion, the intensity of edge pixels, a nominal intensity, or any other suitably chosen intensity.

Optionally, resizing and normalization module 226 can normalize the intensity of the pixels of the cropped portion to a preset range of intensities, e.g., [*Iₘᵢₙ*, *Iₘₐₓ*], where *Iₘᵢₙ* is the minimum intensity and *Iₘₐₓ* is the maximum intensity that IRAC 132 is configured to process. In some implementations, the minimum intensity can be zero, *Iₘᵢₙ* = 0. The intensity rescaling factor can be determined by identifying the maximum intensity *iₘₐₓ* in the cropped portion, e.g., *R* = *Iₘₐₓ*/*iₘₐₓ.* Each pixel intensity can then be rescaled by the determined factor *R*. Since different sensing modalities can have different intensities (including the maximum intensities *iₘₐₓ*) different rescaling factors *R* can be used for lidar/radar/camera/IR camera images and portions of the images. Additionally, resizing and normalization module 226 can perform other preprocessing of the cropped portions including filtering, denoising, and the like.

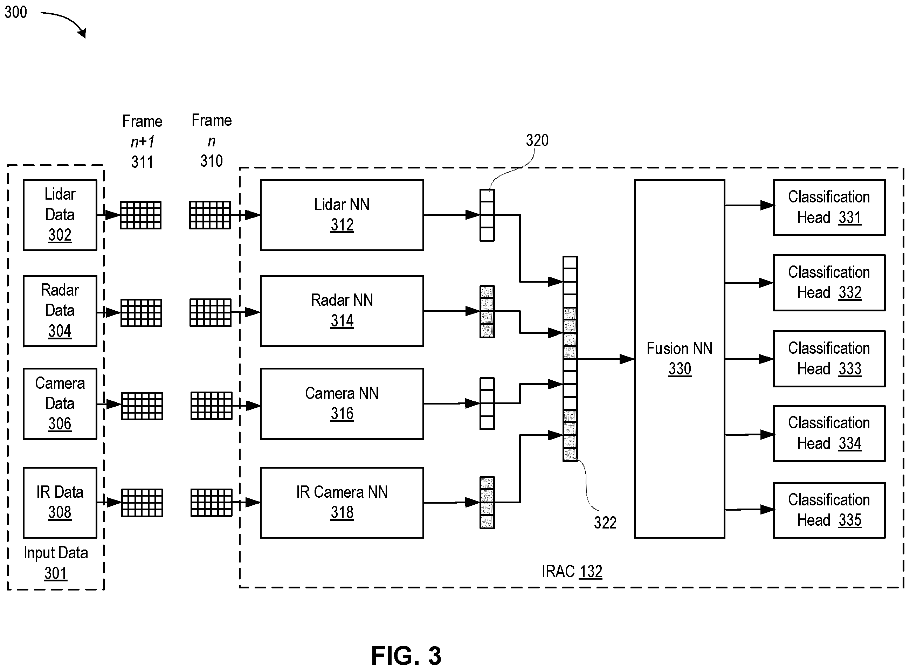

IRAC 132 can process the cropped portions of the images, e.g., as described in more detail below in conjunction with **FIG. 3**. IRAC 132 can classify candidate VRUs depicted in the cropped portions using one or more classes, e.g., non-VRU, generic VRU, pedestrian VRU, bicyclist VRU, animal VRU, etc. For example, while detection module 220 can mark-up an overhead heater in an outdoor-seating café as a candidate VRU, more accurate IRAC 132 processing can determine the heater to be a false positive non-VRU. In some implementations, the one or more classes can include additional sub-classes, such as an adult pedestrian, a child pedestrian, a pedestrian walking a dog, a domestic animal, a wild animal, etc. Any number of classes/subclasses can be defined during training using correspondingly annotated sets of training images.

In some implementations, the output of IRAC 132 can include a probability *pⱼ* that a specific candidate VRU belongs to a *j*-th class. In some implementations, the probabilities can be determined by independent classification heads and the sum of the probabilities need not be constrained, e.g., ∑*ⱼ pⱼ* ≠ 1. If the output probability *pⱼ* is at or above a first threshold probability *P*₁ (e.g., 85%, 90%, etc.), IRAC 132 can determine with high confidence that the candidate VRU is a real VRU. IRAC 132 can pass the identification of the VRU to tracking module 230 that can continue tracking the object until the VRU is beyond a predetermined distance of monitoring (which can depend on the speed and/or type of the identified VRU and can be different for a motorcyclist than for a pedestrian). In some implementations, IRAC 132 can perform periodic confirmation of the VRU classification of the VRU being tracked, e.g., every *n*-th sensing frame. If the probability *pⱼ* is below the first threshold probability *P*₁, but at or above the second threshold probability *P*₂ (e.g., 65%, 70%, etc.), IRAC 132 can determine the status of the candidate VRU as uncertain and place the candidate VRU for additional validation, e.g., every *m*-th sensing frame. If it is determined by IRAC 132 that each of the probabilities {*pⱼ*} is below the second threshold probability *P*₂, IRAC 132 can conclude that the candidate VRU is not a real VRU and can output instructions to tracking module 224 to stop tracking the candidate VRU. In such instances, tracking module 224 can cause cropping module 222 to cease cropping portions of the sensing frames that depict the candidate VRU, so that IRAC 132 is not tasked with additional processing of the depictions of this candidate VRU. In some implementations, based on unexpected changes in the appearance or position of such a candidate VRU, e.g., above a certain empirically determined threshold, cropping module 222 can resume cropping the changed depiction of the candidate VRU and cause IRAC 132 to reclassify the candidate VRU based on the changed depiction. The classification and tracking procedure can then be repeated, e.g., as described above.

Tracking can be performed by monitoring coordinates of the identified VRUs (e.g., geometric center-of-mass coordinates of a VRU, the VRU's bounding box, etc.) and velocity. The velocity can be determined based on the radial Doppler-detected velocity and/or y computed from the coordinates of the VRU. For example, tracking module 224 can determine that the distance to the VRU at time *t_{A}* of frame A is *R*(*t_{A}*) while the radial velocity is *Vᵣ*(*t_{A}*). Correspondingly, object tracking module 230 can predict that the distance to the VRU at the time *t_{B}* of frame B will be *R*(*t_{A}*) - *Vᵣ*(*t_{A}*) *·* (*t_{B}* - *t_{A}*). Tracking module 224 can subsequently receive frame B sensing data and confirm that the VRU has moved in agreement with the prediction and can further correct the location of the VRU, based on the new sensing data from frame B. Additionally, based on the new Doppler data for frame B, tracking module 224 can make the next prediction, e.g., for the location of the blob at time *t_{C}* of frame C.

Tracking data generated by tracking module 224 can be provided to AVCS 140. AVCS 140 evaluates the trajectories of the VRUs and other objects being tracked and determines whether to modify the current driving trajectory of the AV in view of the location and speed of the tracked objects. For example, if a tracked pedestrian or bicyclist is within a certain distance from the AV, the AVCS 140 can slow the AV down to a speed that ensures that the pedestrian or bicyclist can be safely avoided. Alternatively, AVCS 140 can change lanes, e.g., if an adjacent lane is free from obstructions, or perform some other driving maneuver.

IRAC 132 can be trained using actual sensing images and other data that have been recorded during driving missions and annotated with ground truth, which can include correct identification of candidate VRUs as real or spurious, e.g., based on a human input. Training images can include images obtained by the sensors of the specific modalities that are to be deployed on a particular autonomous driving or driver-assisted platform. For example, a particular IRAC 132 that is intended to be used with lidar data, optical range camera data, and IR data can be trained with the corresponding sets of training data obtained with lidars, optical range cameras, and IR cameras. During training of a different IRAC 132 that is to be used with radar data in place of lidar data, the lidar training images can be replaced with radar training images.

Training can be performed by a training engine 242 hosted by a training server 240, which can be an outside server that deploys one or more processing devices, e.g., central processing units (CPUs), graphics processing units (GPUs), etc. In some implementations, one or more models of IRAC 132 can be trained by training engine 242 and subsequently downloaded onto the perception system 130 of the AV 100. IRAC 132, as illustrated in **FIG. 2**, can be trained using training data that includes training inputs 244 and corresponding target outputs 246 (correct matches for the respective training inputs). During training of IRAC 132, training engine 242 can find patterns in the training data that map each training input 244 to the target output 246.

Training engine 242 can have access to a data repository 250 storing multiple camera/IR camera images 252 and lidar/radar images 254 obtained during driving situations in a variety of driving environments (e.g., urban driving missions, highway driving missions, rural driving missions, etc.). During training, training engine 242 can select (e.g., randomly), as training data, a number of sets of camera/IR camera images 252 and sets of lidar/radar images 254. Training data can be annotated with correct object identifications. In some implementations, annotations can be made by a developer before the annotated training data is placed into data repository 250. Annotated training data retrieved by training server 240 from data repository 250 can include one or more training inputs 244 and one or more target outputs 246. Training data can also include mapping data 248 that maps training inputs 244 to target outputs 246. For example, mapping data 248 can identify a radar blob with a VRU object in an IR camera image. The mapping data 248 can include an identifier of the training data, location of the VRU, size of the VRU, speed and direction of motion of the VRU, class (sub-class) of the VRU, and other suitable information. The mapping data can further include various lidar/radar/camera/IR camera depictions of non-VRU objects. In some implementations, training can be performed using mapping data that is unannotated. For example, training inputs can include a time series of sensing frames that include depictions of pedestrians, wild animals (or any other VRUs) that initially remain outside the roadway but subsequently move onto the roadway. By discovering patterns in the appearance of VRUs and/or motion of VRUs, IRAC 132 can learn to identify objects of suitable size that are likely to appear within the driving environment of the vehicle and close to the vehicle's driving path and are, therefore, likely to be VRUs. Similarly, unannotated sensing frames can include stationary (relative to the ground though not necessarily relative to the vehicle) objects that remain outside the roadway. By discovering patterns in the appearance and/or the motion of such objects, IRAC 132 can learn to identify such objects as non-VRUs.

During training of IRAC 132, training engine 242 can change parameters (e.g., weights and biases) of various models of IRAC 132 until the models successfully learn how to identify and classify target outputs 246, e.g., various VRUs and non-VRUs. In some implementations, different models (subnetworks) of IRAC 132 (as described below in conjunction with **FIG. 3**) can be trained separately. In some implementations, various models (subnetworks) of IRAC 132 can be trained together (e.g., concurrently). Different models can have different architectures (e.g., different numbers of neuron layers and different topologies of neural connections) and can have different settings (e.g., activation functions, etc.).

The data repository 250 can be a persistent storage capable of storing lidar/radar/camera/IR camera images and other data, as well as data structures configured to facilitate accurate and fast classification of VRUs, in accordance with implementations of the present disclosure. The data repository 250 can be hosted by one or more storage devices, such as main memory, magnetic or optical storage disks, tapes, or hard drives, network-attached storage (NAS), storage area network (SAN), and so forth. Although depicted as separate from training server 240, in an implementation, the data repository 250 can be a part of training server 240. In some implementations, data repository 250 can be a network-attached file server, while in other implementations, data repository 250 can be some other type of persistent storage such as an object-oriented database, a relational database, and so forth, that can be hosted by a server machine or one or more different machines accessible to the training server 240 via a network (not shown in **FIG. 2**).

**FIG. 3** is a schematic diagram illustrating example operations 300 of an infrared-assisted classifier that uses one or more machine-learning models for fast and accurate classification of VRUs, in accordance with some implementations of the present disclosure. Example operations 300 can be performed by IRAC 132 of the perception system 130 depicted in **FIG. 1**. In one implementation, IRAC 132 that perform operations 300 can include multiple neural networks (NNs), although referred to herein as subnetworks, including a lidar NN 312, a radar NN 314, a (optical range) camera NN 316, an IR camera NN 318, a fusion NN 330, classification heads 331-335, and/or other networks or subnetworks not explicitly depicted in **FIG. 3**. Although depicted as separate blocks in **FIG. 3**, various illustrated NNs can be parts of the same NN trained jointly. Neurons in the neural networks are associated with learnable weights and biases. The neurons can be arranged in layers. Some of the layers can be hidden layers. Each of the NNs depicted in **FIG. 3** can include multiple hidden neuron layers and can be configured to perform one or more functions that facilitate classification of VRUs.

Input data 301 into IRAC 132 can include data from one or more sensing modalities, including but not limited to a lidar data 302, a radar data 304, a (optical range) camera data 306, an IR data 308, and the like. Each of the input data can have a digital pixelated form representing three-dimensional (3D) intensity maps *I*(*x*₁,*x*₂,*x*₃) or a two-dimensional (2D) intensity maps, *I*(*x*₁,*x*₂)*.* In some implementations, 2D intensity maps (e.g., lidar and/or radar intensity maps) can represent a specific slice of the 3D intensity for a specific height *x*₃ = *h* above the ground, e.g., *I*(*x*₁,*x*₂,*h*), or a maximum value with respect to the vertical coordinate, *I*(*x*₁,*x*₂) = {*I*(*x*₁,*x*₂,*x*₃): *x*₃}*,* or an average value of *I*(*x*₁,*x*₂,*x*₃) within some interval of heights, *x*₃ ∈ (*a, b*), or some other suitable value. In some implementations, lidar data 302 and/or radar data 304 can include a 3D Doppler shift/velocity intensity map *V*(*x*₁,*x*₂,*x*₃) or its corresponding 2D projection (e.g., determined as described above fin relation to the intensity *I*). It should be understood that coordinates (*x*₁,*x*₂,*x*₃) or (*x*₁,*x*₂) are not limited to Cartesian coordinates and can include any suitable system of coordinates, e.g., a spherical coordinate system, cylindrical coordinate system, elliptical coordinate system, polar coordinate system, and so on. In some implementations, a coordinate system can be a non-orthogonal coordinate system, e.g., an affine coordinate system.

In some implementations, lidar data 302 and/or radar data 304 can include lidar and/or radar returns that undergo statistical filtering (which can be performed by detection module 220 and/or tracking module 224 depicted in **FIG. 2**), e.g., using a Kalman filter algorithm, for more accurate identification of locations and velocities of lidar/radar clusters and various detected objects. The Kalman filter algorithm can track motion of the detected clusters/objects over multiple sensing frames. For example, based on the estimate of the location/velocity of a cluster of lidar/radar returns, the Kalman filter algorithm can predict location/velocity of the cluster for a subsequent frame, obtain new data for the subsequent frame, update covariance matrices for the location/velocity of the cluster and for the measurement noise, and make a more accurate estimate of the current location/velocity of the blob. This process can be repeated as long as the cluster is being tracked.

Camera data 306 and IR data 308 can include images in any suitable digital format (JPEG, TIFF, GIG, BMP, CGM, SVG, and so on). Each image can include a number of pixels. The number of pixels can depend on the resolution of the image. Each pixel can be characterized by one or more intensity values. A black-and-white pixel can be characterized by one intensity value representing the brightness of the pixel, with value 1 corresponding to a white pixel and value 0 corresponding to a black pixel (or vice versa). The intensity value can assume continuous (or discretized) values between 0 and 1 (or between any other chosen limits, e.g., 0 and 255). Similarly, a color pixel can be represented by more than one intensity value, e.g., by three intensity values (e.g., if the RGB color encoding scheme is used) or four intensity values (e.g., if the CMYK color encoding scheme is used). Each of the images in the input data 301 can be preprocessed prior to being input into IRAC 132, e.g., downscaled (with multiple pixel intensity values combined into a single pixel value), upsampled, filtered, denoised, and the like.

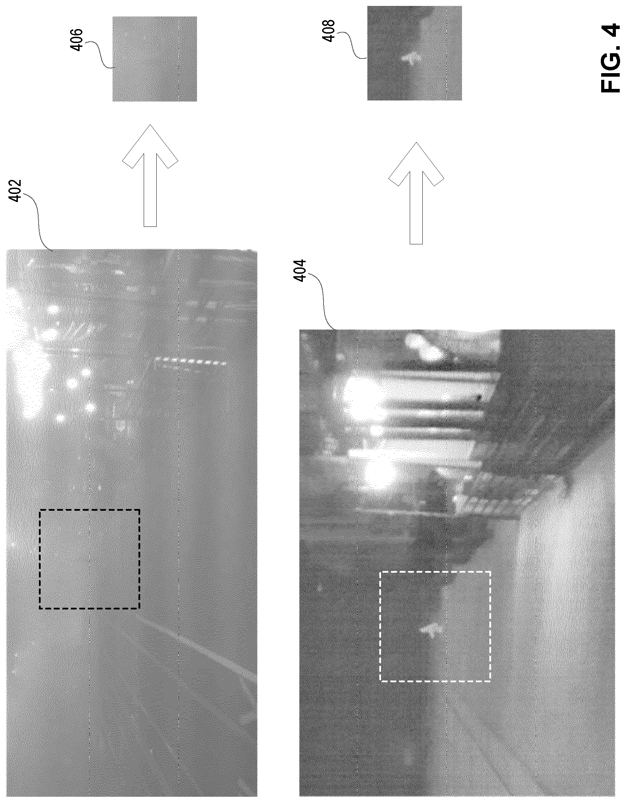

In some implementations, images included in input data 301 (e.g., any of camera data 306 and IR data 308, as well as in lidar data 302 and/or radar data 304) can be large images that depicts the same (or approximately the same) region of the driving environment. In some implementations, input data 301 can include portions (patches) of the larger images, cropped by cropping module 222, as described above in relation to **FIG. 2**. **FIG. 4** illustrates images that can be used an input into IRAC 132, in accordance with some implementations of the present disclosure. Image 402 is an image obtained by an optical range camera depicting a portion of a driving environment under reduced visibility conditions (foggy weather). Image 404 is an image of the same portion of the driving environment obtained contemporaneously by an IR camera. In some implementations, uncropped image 402 can be used as part of camera data 306 and an uncropped image 404 can be used as part of IR data 308. In some implementations, to reduce the size of the input (and hidden) layers of IRAC 132 and, therefore, reduce processing time and complexity of IRAC 132, input images can be cropped. In particular, detection module 220 can detect the presence of a candidate VRU (e.g., a pedestrian crossing the roadway) in one of the image 402 or image 404 (or both) and cropping module 222 can crop a portion of each image for use as camera data 306 and IR data 308. More specifically, cropping module 222 can crop a portion 408 of image 404 depicting the candidate VRU and can further crop a corresponding portion 406 of image 402 that depicts the same region of the driving environment. The correspondence between the two regions can be established based on calibration of the respective field of views of the optical camera and the IR camera that maps pixels of the optical camera on pixels of the IR camera (or vice versa). With a continuing reference to **FIG. 3**, the cropped portion 406 can then be processed by camera NN 316 and the cropped portion 408 can be processed by IR camera NN 318.

Input data 301 can be organized into frames provided to IRAC 132 in a pipelined fashion. For example, during a specific computational cycle (or a set of cycles), sensing frame *n* 310 that includes images associated with timestamp *tₙ* can be input into IRAC 132 and processed by the input layers of some or each of NNs 312-318. Similarly, during the next computational cycle (or a set of cycles), frame *n* + 1 311 that includes images associated with timestamp *t*_{*n*+1} can be input into IRAC 132 and processed by the input layers of NNs 312-318 while frame *n* 310 is being processed by the second layers (first hidden layers) of NNs 312-318, and so on. In some implementations, additional NNs (e.g., copies of NNs 312-318) can be deployed. For example, while NNs 312-318 are processing data of every odd sensing frame, a copy of NNs 312-318 can be processing input data 301 of every even sensing frame.

It should be understood that the four NNs 312-318 are depicted as part of IRAC 312 as an illustration and that in specific implementations the number of NNs can be different (e.g., less or more) than four. In some implementations, a radar NN 314 (or lidar NN 312) can be absent. Correspondingly, the respective data (e.g., radar data 304 or lidar data 302) is not used as part of input data 301. In some implementations, additional NNs not depicted in **FIG. 3** can be deployed, e.g., night-vision camera NNs, sonar NNs, etc., each processing a portion of input data 301 generated by the respective sensor (e.g., night-vision camera, ultrasound sonar sensor, etc.). In some implementations, just one IR camera NN 318 can be used.

Each of NNs 312-318 can process a respective modality of input data 301 (e.g., lidar NN can process lidar data 302, camera NN 316 can process camera data 306, and so on) and can output respective feature vectors 320 (depicted schematically as columns of white or shaded squares) that characterizes properties of the corresponding intensity map. In some implementations, each of NNs 312-318 can include a number of convolutional layers to extract local and global context of the respective input data. Convolutional layers can use any suitable parameters, including kernel/mask size, kernel/mask weights, sliding step size, and the like. Convolutional layers can alternate with padding layers and can be followed with one or more pooling layers, e.g., maximum pooling layers, average pooling layers, and the like. Some of the layers of NNs 312-318 can be fully-connected layers. In some implementations, each or any of NNs 312-318 can be fully convolutional. The number of nodes in the output layer NNs 312-318 can be equal to the total number of elements in all output feature vectors 320. In some implementations, the dimensions of feature vectors 320 can be the same (e.g., 256 bits, 1024 bits, etc.) for all NNs 312-318. In some implementations, the dimensions of the feature vectors 320 can be different for different NNs. For example, a feature vector output by lidar NN 312 can be 128 bits whereas feature vectors output by camera NN 316 and IR camera NN 318 can be 256 bits.

The feature vectors output by NNs 312-318 can be combined (e.g., concatenated) into an aggregated feature vector 322. The aggregated feature vector 322 can be input into a fusion NN 330. In some implementations, fusion NN 330 can be a fully-connected neural network. In some implementations, fusion NN 330 can include one or more convolutional layers. An output of fusion NN 330 can be provided as an input into one or more classification heads 331-335. Each of the classification heads can have one or more neuron layers and can be trained to output classification of candidate objects depicted in input data 301. For example, classification head 331 can output the likelihood (e.g., probability) that a candidate object is a pedestrian, classification head 332 can output the probability that the candidate object is a bicyclist, classification head 333 can output the probability that the candidate object is a motorcyclist, classification head 334 can output the probability that the candidate object is an electric scooter rider, classification head 334 can output the probability that the candidate object is an animal (e.g., a dog, a deer, etc.), and so on. In some implementations, classification heads 331-335 may use a sigmoid function to output the probabilities. In some implementations, classification heads 331-335 may be combined into a single classification head that uses a softmax function and outputs multiple classification probabilities.

In some implementations, fusion NN 330 can be an RNN, e.g., or any network with memory. More specifically, fusion NN 330 can have an architecture in which processing of previous inputs affects processing of subsequent inputs, including but not limited to a fully recurrent NN, an Elman NN, a Jordan NN, a Hopfiled NN, a long short-term memory NN, a recursive NN, a bi-directional NN, a gated recurrent NN, and so on, or any combination thereof. For example, fusion NN 330 can have neural connections between different layers of neurons. The recurrent architecture of NN 330 enables dynamic improvement of the accuracy of VRU classifications. In one example, during cycle 1, sensing frame *n* 310 is inputted into IRAC 132. After cycle *N*, IRAC 132 outputs a first classification (e.g., one or more probabilities/confidence levels/etc.) of a candidate VRU depicted in sensing frame 1. Here, *N* can be the total number of neuron layers used to process the input data. The classification can be preliminary and based on a single view of the candidate VRU. During cycle 2, sensing frame *n*+*1* 311 is inputted into IRAC 132. After cycle *N*+*1,* IRAC 132 outputs a second classification of the same candidate object. During processing of the sensing frame *n*+*1* 311, at least some of the neuron layers can receive, as input, various output of neuron computations that are based on processing of the previous sensing frame *n* 310. Such additional inputs can improve accuracy of second classification output by IRAC 132. The second classification can, therefore, be more accurate than the first classification. As additional views of the candidate VRU become available and are being processed (as subsequent sensing frames), the dynamic (time-dependent) classification of the VRU can further improve. In some implementations, such dynamic classification can be performed by IRAC 132 in parallel with tracking of the candidate VRU by tracking module 224 and the dynamically updated classification and tracking information can be delivered to AVCS 140 in real time (or with an N-cycle delay).

Training of lidar NN 312, radar NN 314, camera NN 316, IR camera NN 318, fusion NN 330, and classification heads 331-335 can be performed using sensing data collected during actual driving missions (autonomous and/or driver-controlled). Training can be performed using one or more training sets. Each training set can include lidar/radar/camera/IR camera images of any region of a driving environment. Each training set can include one or more real VRUs and one or more spurious VRUs (non-VRUs). During training, incorrect output classifications of real VRUs detections as spurious and spurious VRUs detections as real can be used to adjust weights and biases of lidar NN 312, radar NN 314, camera NN 316, IR camera NN 318, fusion NN 330, and classification heads 331-335 by backpropagating errors through the neuron layers of the respective NNs. More specifically, weights and biases of the NNs can be modified until a given candidate VRU within a specific training set is classified correctly. The process can be repeated with other candidate VRUs of the same training set. Subsequently, a new training set can be selected and various candidate VRUs of the new set can be classified with NN parameters being changed again until a successful classification of at least a target portion of candidate VRUs in the new training set is achieved. This training process can continue until a target success rate (e.g., 90%, 95%, etc.) of reliable classification of VRUs in the training sets is reached. In some implementations, the target success rate can be determined based on a set of testing images previously not seen by lidar NN 312, radar NN 314, camera NN 316, IR camera NN 318, fusion NN 330, and classification heads 331-335.

In some implementations, to reduce the time and cost of training, some of NNs 312-318 can be copies of each other. For example, camera NN 316 can be trained using training optical range images and a copy of the same network (having the same architecture, weights, biases, etc.) can then be used as IR camera NN 318. The compatibility of such cross-modality training can be facilitated by the use of resizing and normalization module 226 (depicted in FIG. 2), which ensures that the formats of input camera data 306 and IR data 308 are harmonized even though being obtained by different sensors. Similarly, any other of NNs 312-318 can be copies of any of the other network.

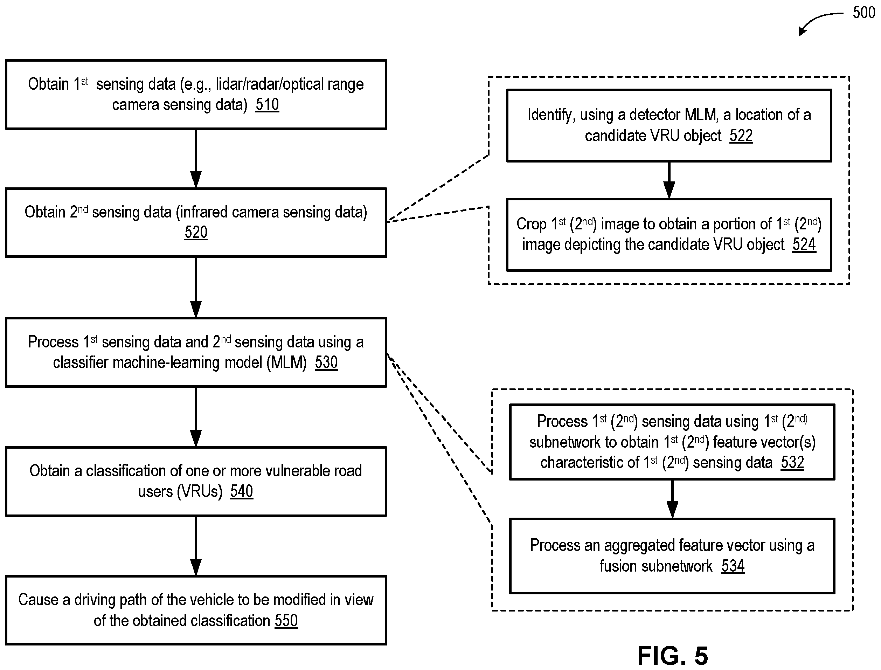

**FIG. 5** illustrates an example method 500 of infrared-assisted detection, classification, and tracking of VRUs, in accordance with some implementations of the present disclosure. A processing device, having one or more processing units, e.g., central processing units, CPUs, and/or graphics processing units, GPUs, communicatively coupled to one or more memory devices can perform method 500 and/or each of its individual functions, routines, subroutines, or operations. In some implementations, a low-resource microcontroller can perform method 500 or any portion of its operations. The processing device executing method 500 can perform instructions issued by various components of the sensing system 110 or data processing system 120 of **FIG. 1**, e.g., IRAC 132, IRAT 134, etc.. Method 500 can be directed to systems and components of an autonomous driving vehicle, such as autonomous vehicle 100 of **FIG. 1**, as well as system and components of any driver-assistance technology. Method 500 can be used to improve performance of the sensing system 110, data processing system 120, and/or the autonomous vehicle control system 140. In certain implementations, a single processing thread can perform method 500. Alternatively, two or more processing threads can perform method 500, each thread executing one or more individual functions, routines, subroutines, or operations of the methods. In an illustrative example, the processing threads implementing method 500 can be synchronized (e.g., using semaphores, critical sections, and/or other thread synchronization mechanisms). Alternatively, the processing threads implementing method 500 can be executed asynchronously with respect to each other. Various operations of method 500 can be performed in a different order compared with the order shown in **FIG. 5**. Some operations of method 500 can be performed concurrently with other operations. Some operations can be optional.

Method 500 can use real-time sensing data obtained by scanning an environment of the AV using a plurality of sensors of the sensing system of the AV. The sensing system can include one or more lidar sensors, radar sensors, optical range cameras, IR cameras, and/or other sensors. Optical range and/or IR cameras can include panoramic (surround-view) cameras, partially panoramic cameras, high-definition (high-resolution) cameras, close-view cameras, cameras having a fixed field of view (relative to the AV), cameras having a dynamic (adjustable) field of view, cameras having a fixed or adjustable focal distance, cameras having a fixed or adjustable numerical aperture, and any other suitable cameras. Optical range cameras can further include night-vision cameras. Sensing data should be understood as any data obtained by any sensors of the sensing system, including raw (unprocessed) data, low-level (minimally processed) data, high-level (fully processed) data, and so on. Sensing data can include images, which should be understood as any arrays or tables of digital data (e.g., of data pixels) that represents the sensing data and maps detected intensity (or any function of the detected intensity, e.g., inferred temperature of detected objects) to various spatial locations in the environment. Images can include various metadata that provides geometric associations between image pixels and spatial locations of objects, correspondence of pixels of one image (e.g., a lidar image) and pixels of another image (e.g., a camera image), and so on. The detected intensities can refer to the magnitude of electromagnetic signals detected by various sensors as well as Doppler shift (radial velocity) data, as can be obtained by lidar and/or radar sensors.

At block 510, method 500 can include obtaining, using a sensing system of a vehicle, a first sensing data characterizing an environment of the vehicle. The first sensing data can include at least one of a lidar sensing data (e.g., lidar data 302), a radar sensing data (e.g., radar data 304), or an optical range camera sensing data (e.g., camera data 306), and can be collected during operations of the AV or a human-operated vehicle equipped with driver-assistance technology. Operations of the vehicle can include starting the vehicle, driving the vehicle (e.g., on streets and highways, rural roads, etc.), stopping the vehicle, parking the vehicle, operating the vehicle in an idling mode, and so on. Collected sensing data can include lida/radar return points, each return point associated with a distance to a reflecting surface, a direction from the lidar/radar transmitter/receiver towards the reflecting surface, a velocity (e.g., radial velocity) of the reflecting surface, a strength of the reflected signal, and the like. Collected first sensing data can further include optical range camera images. Each optical camera image can include a two-dimensional projection of a portion of the environment, obtained using an optical system having a particular focal distance and pointing along a particular direction (direction of view), which can be a direction of the optical axis of the camera's optical system. Optical range camera images can carry information about instantaneous locations of various objects in the driving environment. The data obtained by the sensing system of the vehicle can be provided to the data processing system and to IRAC 132, in particular.

At block 520, method 500 can include obtaining, using the sensing system of the vehicle, a second sensing data (e.g., IR data 308) characterizing the environment of the vehicle. The second sensing data can include an infrared camera sensing data. The second sensing data can be obtained concurrently with the first sensing data and under the same or similar conditions, e.g., during operations of the vehicle. In some implementations, obtaining the first sensing data and the second sensing data can include additional processing, e.g., by a detector MLM (which can be a part of detection module 220). More specifically, as depicted with block 522 of the top callout portion in **FIG. 3**, the detector MLM can be configured to identify a location of a candidate VRU object within the environment. In some implementations, the detector MLM can identify multiple candidate VRUs. For example, the detector MLM can identify, based on at least one of the first image or the second image, a first candidate object and a second (third, etc.) candidate object within the environment. The first image can include at least one of a lidar image a radar image, or an optical range camera image. The second image can include an infrared camera sensing image. At block 524, method 500 can include cropping the first image of the environment to obtain a portion of the first image that depicts the candidate VRU object(s). Similarly, method 500 can include cropping the second image of the environment to obtain a portion of the second image that depicts the candidate VRU object(s).

At block 530, method 500 can continue with a processing device processing the first sensing data and the second sensing data using a classifier MLM, e.g. IRAC 132. In some implementations, the classifier MLM can include a neural network (NN). As depicted with the bottom callout portion in **FIG. 3**, processing the first sensing data and the second sensing data can involve a number of operations. More specifically, at block 532, the processing device can process the first sensing data using a first subnetwork (e.g., lidar NN 312, radar NN 314, and/or camera NN 316) to obtain one or more first feature vectors characteristic of the first sensing data. In some implementations, as described in relation to **FIG. 3**, multiple subnetworks (NN 312-316 or any other subnetworks not explicitly depicted in **FIG. 3**) can process the respective sensing data concurrently, e.g., in parallel. Similarly, the processing device can process the second sensing data (e.g., IR data 308) using a second subnetwork (e.g., IR camera NN 318) to obtain one or more second feature vectors characteristic of the second sensing data. In some implementations, the first subnetwork (e.g., any one of lidar NN 312, radar NN 314, and/or camera NN 316) can be trained using a plurality of sets of at least one of radar training data, lidar training data, or optical camera training data. In some implementations, the second subnetwork can be trained using IR data or a combination of IR data and non-IR data (e.g., using optical range camera training data). In other implementations, the second subnetwork (e.g., using IR camera NN 318) can be a copy of the first subnetwork. As a result, the second subnetwork need not be trained using IR data, which can reduce the total training time and cost.

At block 534, method 500 can continue with the processing device processing an aggregated feature vector using a fusion subnetwork (e.g., fusion NN 330). The aggregated feature vector (e.g., aggregated feature vector 322) can include the one or more first feature vectors and the one or more second feature vectors (e.g., feature vectors 320 output by the respective subnetworks). In some implementations, the fusion subnetwork is a recurrent NN (RNN). The recurrent NN can have any neural architecture in which processing of previous inputs affects processing of subsequent inputs (e.g., any NN with memory). The recurrent NN can include any a fully recurrent NN, an Elman NN, a Jordan NN, a Hopfiled NN, a long short-term memory NN, a recursive NN, a bi-directional NN, a gated recurrent NN, and so on, or any combination thereof.

At block 540, method 500 can continue with the processing device obtaining, using an output of the classifier MLM, a classification of one or more VRUs present in the environment of the vehicle. Obtaining the classification of one or more VRUs can include using an ouptut of the fusion subnetwork. In some implementations, the neural network (e.g., IRAC 132) can include a plurality of classification heads (e.g., classification heads 331-335). Each of the plurality of classification heads can be configured to process the output of the fusion subnetwork and to determine, for at least one candidate VRU object in the environment, a probability of the candidate VRU object belonging to a respective one of a plurality of VRU classes. In some implementations, the plurality of VRU classes can include at least one of a pedestrian, a bicyclist, or a motorcyclist.

In some instances, an environment of the vehicle can include both VRU(s) and non-VRU(s). Correspondingly, the first image (e.g., a lidar image or an optical range camera image) can include depiction of VRU(s) and non-VRU(s) that visually resemble VRUs. Similarly, the second image (e.g., an IR camera image) can include depictions of the same objects (albeit at different resolution, contrast, imaging intensity, etc.). The classifier MLM can process at least a part of the first image and at least a part of the second image to determine that a first candidate object is a VRU and that a second candidate object is a non-VRU. In some implementations, processing by the classifier MLM can be assisted by cropping the first image and/or second image. More specifically the part of the first image can include a first cropped portion of the first image that includes a depiction of the first candidate object. Similarly, a second cropped portion of the first image can include a depiction of the second candidate object. The second image can be cropped similarly, with a first (second) cropped portion of the second image depicting the first (second) candidate object.

In some implementations, classification of VRUs can be a dynamic process and can include a time series of sensing frames. More specifically, each of the first sensing data (e.g., lidar data 302, optical range camera data 306, etc.) and the second sensing data (e.g., IR data 308) can include a plurality of images. Each of the plurality of images can be associated with a respective sensing frame of a plurality of sensing frames (e.g., frame *n* 310, frame *n*+*1* 311, etc.) and each of the plurality of sensing frames can correspond to a respective one of a plurality of times. In some implementations, classification of one or more VRU(s) can change (e.g., improve) with additional sensing frames, enabled by the memory of the fusion subnetwork maintaining information about previously processed sensing frames. In such implementations, obtaining the classification of one or more VRUs can include performing pipeline processing of the plurality of sensing frames using the classifier MLM.

At block 550, method 500 can continue with causing a driving path of the vehicle to be modified in view of the obtained classification of the one or more VRUs, e.g., based on the determination that a particular candidate VRU object is a real VRU. The modification of the driving path of the vehicle can depend on the state of motion of the VRU(s). The state of motion can include the location (coordinates) and velocity of the VRU(s) and can be determined, e.g., from ToF data, directional data, Doppler shift information of the lidar/ radar signals, camera data, IR camera data, and the like. In some implementations, the state of motion of the VRU(s) is determined based on lidar/radar/camera/IR camera data of multiple sensing frames acquired at different times. The state of motion can further be determined using Kalman filtering. Using the identified state of motion, the perception system of the AV can determine that the VRU is sufficiently close to the AV (and/or moving with a substantial speed) to interfere with the driving path of the AV. The perception system can communicate this information to the control system (e.g., the AVCS 140). The control system can chart a new driving path (or modify the existing driving path) that avoids the object. The control system can implement the new driving path by outputting instructions to powertrain and steering 150, vehicle electronics 160, signaling 170, etc., to cause the AV to brake, change lanes, stop, back up, accelerate, and so on, and to ensure that the AV follows the determined driving path. In some implementations, the control system can alert the driver of a driver-operated vehicle as to the presence of the VRU(s) near an existing driving path of the vehicle. The driver can then modify the driving path of the vehicle.

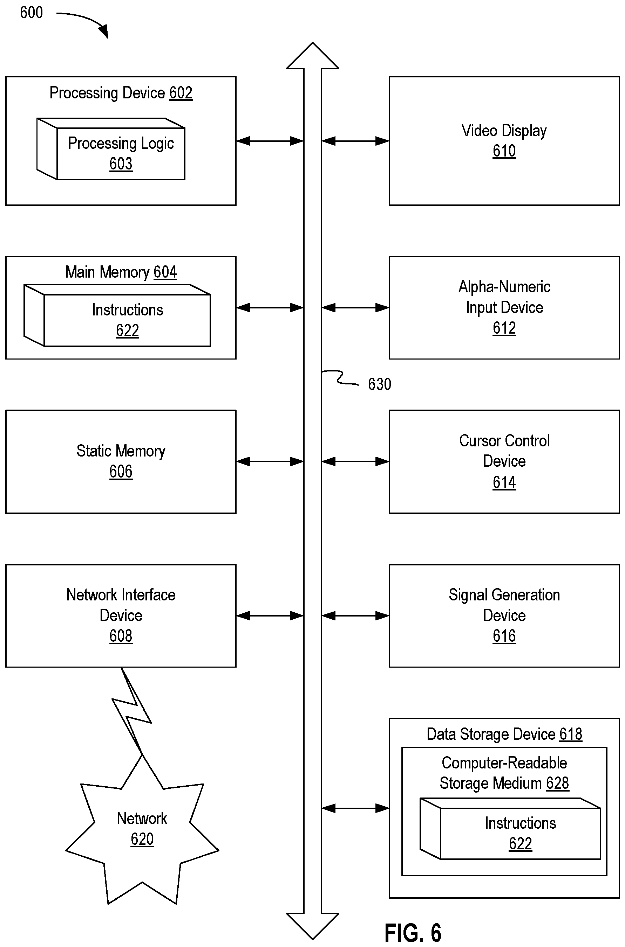

**FIG. 6** depicts a block diagram of an example computer device 600 capable of enabling infrared-assisted detection, classification, and tracking of VRUs, in accordance with some implementations of the present disclosure. Example computer device 600 can be connected to other computer devices in a LAN, an intranet, an extranet, and/or the Internet. Computer device 600 can operate in the capacity of a server in a client-server network environment. Computer device 600 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 600 can include a processing device 602 (also referred to as a processor or CPU), a main memory 604 (e.g., read-only memory (ROM), flash memory, dynamic random access memory (DRAM) such as synchronous DRAM (SDRAM), etc.), a static memory 606 (e.g., flash memory, static random access memory (SRAM), etc.), and a secondary memory (e.g., a data storage device 618), which can communicate with each other via a bus 630.

Processing device 602 (which can include processing logic 603) represents one or more general-purpose processing devices such as a microprocessor, central processing unit, or the like. More particularly, processing device 602 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 602 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 602 can be configured to execute instructions performing method 500 of infrared-assisted detection, classification, and tracking of vulnerable road users.

Example computer device 600 can further comprise a network interface device 608, which can be communicatively coupled to a network 620. Example computer device 600 can further comprise a video display 610 (e.g., a liquid crystal display (LCD), a touch screen, or a cathode ray tube (CRT)), an alphanumeric input device 612 (e.g., a keyboard), a cursor control device 614 (e.g., a mouse), and an acoustic signal generation device 616 (e.g., a speaker).

Data storage device 618 can include a computer-readable storage medium (or, more specifically, a non-transitory computer-readable storage medium) 628 on which is stored one or more sets of executable instructions 622. In accordance with one or more aspects of the present disclosure, executable instructions 622 can comprise executable instructions performing method 500 of infrared-assisted detection, classification, and tracking of vulnerable road users.

Executable instructions 622 can also reside, completely or at least partially, within main memory 604 and/or within processing device 602 during execution thereof by example computer device 600, main memory 604 and processing device 602 also constituting computer-readable storage media. Executable instructions 622 can further be transmitted or received over a network via network interface device 608.

While the computer-readable storage medium 628 is shown in **FIG. 6** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

The specification includes the following subject-matter expressed in the form of clauses 1-20:
1. A system comprising:
   a sensing system of a vehicle, the sensing system configured to:
      obtain a first sensing data characterizing an environment of the vehicle, wherein the first sensing data comprises at least one of a lidar sensing data, a radar sensing data, or an optical range camera sensing data; and
      obtain a second sensing data characterizing the environment of the vehicle, wherein the second sensing data comprises an infrared camera sensing data; and
   a perception system of the vehicle, the perception system configured to:
      process the first sensing data and the second sensing data using a classifier machine-learning model (MLM) to obtain a classification of one or more vulnerable road users (VRUs) present in the environment of the vehicle; and
      cause a driving path of the vehicle to be modified in view of the obtained classification of the one or more VRUs.
2. The system of clause 1, wherein the classifier MLM comprises a neural network (NN), and wherein the NN comprises:
   a first subnetwork configured to process the first sensing data and to output one or more first feature vectors characteristic of the first sensing data;
   a second subnetwork configured to process the second sensing data and to output one or more second feature vectors characteristic of the second sensing data; and
   a fusion subnetwork configured to process an aggregated feature vector, wherein the aggregated feature vector comprises the one or more first feature vectors and the one or more second feature vectors, and wherein the classification of the one or more VRUs is determined using an output of the fusion subnetwork.
3. The system of clause 2, wherein the fusion subnetwork is a recurrent NN.
4. The system of clause 2 or 3, wherein the NN further comprises a plurality of classification heads, and wherein each of the plurality of classification heads is configured to process the output of the fusion subnetwork and to determine, for at least one object in the environment, a probability of the object belonging to a respective one of a plurality of VRU classes.
5. The system of clause 4, wherein the plurality of VRU classes comprises at least one of a pedestrian, a bicyclist, or a motorcyclist.
6. The system of any of clauses 2-5, wherein the first subnetwork is trained using a plurality of sets of at least one of radar training data, lidar training data, or optical camera training data, and wherein the second subnetwork is a copy of the first subnetwork.
7. The system of any of clauses 1-6, wherein to obtain the first sensing data and the second sensing data, the sensing system is configured to:
   identify, using a detector MLM, a location of a candidate VRU object within the environment;
   crop a first image of the environment to obtain a portion of the first image depicting the candidate VRU object, wherein the first image comprises at least one of a lidar image a radar image, or an optical range camera image; and
   crop a second image of the environment to obtain a portion of the second image depicting the candidate VRU object, wherein the second image comprises an infrared camera sensing data.
8. The system of any of clauses 1-7, wherein each of the first sensing data and the second sensing data comprises a plurality of images, each of the plurality of images being associated with a respective sensing frame of a plurality of sensing frames, wherein each of the plurality of sensing frames corresponds to a respective one of a plurality of times, and wherein the perception system performs pipeline processing of the plurality of sensing frames using the classifier MLM.
9. The system of clause 8, wherein the perception system performs pipeline processing of the plurality of sensing frames using the classifier MLM.
10. The system of any of clauses 1-9, wherein the first sensing data comprises at least two of the lidar sensing data, the radar sensing data, or the optical range camera sensing data.
11. A system comprising:
   a sensing system of an autonomous vehicle (AV), the sensing system configured to:
      obtain a first image of an environment of the AV, wherein the first image comprises at least one of a lidar image a radar image, or an optical range camera image; and
      obtain a second image characterizing the environment of the AV, wherein the second image comprises an infrared camera sensing image; and
   a perception system of the AV, the perception system comprising:
      a detector machine-learning model (MLM) configured to identify, based on at least one of the first image or the second image, a first candidate object and a second candidate object within the environment of the AV; and
      a classifier MLM configured to process at least a part of the first image and at least a part of the second image to determine that the first candidate object is a vulnerable road user (VRU) in the environment of the AV and that the second candidate object is a non-VRU.
12. The system of clause 11, the part of the first image comprises a first cropped portion of the first image and a second cropped portion of the first image, wherein the first cropped portion comprises a depiction of the first candidate object and the second cropped portion comprises a depiction of the second candidate object.
13. The system of clause 11 or 12, wherein the classifier MLM comprises:
   a first neural network (NN) configured to process the first image and to output a first feature vector characteristic of the first image;
   a second NN configured to process the second image and to output a second feature vector characteristic of the second image; and
   a third NN configured to process an aggregated feature vector and to determine a probability of the first candidate object belonging to a VRU class, wherein the aggregated feature vector comprises the first feature vector and the second feature vector, and wherein to determine that the first candidate object is a VRU, the classifier MLM is to determine that the determined probability is above a threshold probability.
14. A method comprising:
   obtaining, using a sensing system of a vehicle, a first sensing data characterizing an environment of the vehicle, wherein the first sensing data comprises at least one of a lidar sensing data, a radar sensing data, or an optical range camera sensing data;
   obtaining, using the sensing system of the vehicle, a second sensing data characterizing the environment of the vehicle, wherein the second sensing data comprises an infrared camera sensing data;
   processing, by a processing device, the first sensing data and the second sensing data using a classifier machine-learning model (MLM);
   obtaining, using an output of the classifier MLM, a classification of one or more vulnerable road users (VRUs) present in the environment of the vehicle; and
   causing, by the processing device, a driving path of the vehicle to be modified in view of the obtained classification of the one or more VRUs.
15. The method of clause 14, wherein the classifier MLM comprises a neural network (NN), and wherein processing the first sensing data and the second sensing data comprises:
   processing the first sensing data using a first subnetwork of the NN to obtain one or more first feature vectors characteristic of the first sensing data;
   processing the second sensing data using a second subnetwork of the NN to obtain one or more second feature vectors characteristic of the second sensing data; and
   processing an aggregated feature vector using a fusion subnetwork of the NN, wherein the aggregated feature vector comprises the one or more first feature vectors and the one or more second feature vectors; and
   wherein obtaining the classification of one or more VRUs comprises:
   using an output of the fusion subnetwork.
16. The method of clause 15, wherein the fusion subnetwork is a recurrent NN.
17. The method of clause 15 or 16, wherein the NN further comprises a plurality of classification heads, wherein each of the plurality of classification heads is configured to process the output of the fusion subnetwork and to determine, for at least one object in the environment, a probability of the object belonging to a respective one of a plurality of VRU classes, and wherein the plurality of VRU classes comprises at least one of a pedestrian, a bicyclist, or a motorcyclist.
18. The method of any of clauses 15-17, wherein the first subnetwork is trained using a plurality of sets of at least one of radar training data, lidar training data, or optical camera training data, and wherein the second subnetwork is a copy of the first subnetwork.
19. The method of any of clauses 14-18, wherein obtaining the first sensing data and the second sensing data comprises:
   identifying, using a detector MLM, a location of a candidate VRU object within the environment;
   cropping a first image of the environment to obtain a portion of the first image depicting the candidate VRU object, wherein the first image comprises at least one of a lidar image a radar image, or an optical range camera image; and
   cropping a second image of the environment to obtain a portion of the second image depicting the candidate VRU object, wherein the second image comprises an infrared camera sensing image.
20. The method of any of clauses 14-19, wherein each of the first sensing data and the second sensing data comprises a plurality of images, each of the plurality of images being associated with a respective sensing frame of a plurality of sensing frames, wherein each of the plurality of sensing frames corresponds to a respective one of a plurality of times, and wherein obtaining, the classification of one or more VRUs comprises:
   performing pipeline processing of the plurality of sensing frames using the classifier MLM.

## Claims

1. A system comprising:
a sensing system of a vehicle, the sensing system configured to:
obtain a first sensing data characterizing an environment of the vehicle, wherein the first sensing data comprises at least one of a lidar sensing data, a radar sensing data, or an optical range camera sensing data; and
obtain a second sensing data characterizing the environment of the vehicle, wherein the second sensing data comprises an infrared camera sensing data; and
a perception system of the vehicle, the perception system configured to:
process the first sensing data and the second sensing data using a classifier machine-learning model (MLM) to obtain a classification of one or more vulnerable road users (VRUs) present in the environment of the vehicle; and
cause a driving path of the vehicle to be modified in view of the obtained classification of the one or more VRUs.

2. The system of claim 1, wherein the classifier MLM comprises a neural network (NN), and wherein the NN comprises:
a first subnetwork configured to process the first sensing data and to output one or more first feature vectors characteristic of the first sensing data;
a second subnetwork configured to process the second sensing data and to output one or more second feature vectors characteristic of the second sensing data; and
a fusion subnetwork configured to process an aggregated feature vector, wherein the aggregated feature vector comprises the one or more first feature vectors and the one or more second feature vectors, and wherein the classification of the one or more VRUs is determined using an output of the fusion subnetwork.

3. The system of claim 2,
wherein the fusion subnetwork is a recurrent NN; and/or
wherein the first subnetwork is trained using a plurality of sets of at least one of radar training data, lidar training data, or optical camera training data, and wherein the second subnetwork is a copy of the first subnetwork.

4. The system of claim 2 or 3, wherein the NN further comprises a plurality of classification heads, and wherein each of the plurality of classification heads is configured to process the output of the fusion subnetwork and to determine, for at least one object in the environment, a probability of the object belonging to a respective one of a plurality of VRU classes.

5. The system of claim 4, wherein the plurality of VRU classes comprises at least one of a pedestrian, a bicyclist, or a motorcyclist.

6. The system of any preceding claim, wherein to obtain the first sensing data and the second sensing data, the sensing system is configured to:
identify, using a detector MLM, a location of a candidate VRU object within the environment;
crop a first image of the environment to obtain a portion of the first image depicting the candidate VRU object, wherein the first image comprises at least one of a lidar image, a radar image, or an optical range camera image; and
crop a second image of the environment to obtain a portion of the second image depicting the candidate VRU object, wherein the second image comprises an infrared camera sensing data.

7. The system of any preceding claim, wherein each of the first sensing data and the second sensing data comprises a plurality of images, each of the plurality of images being associated with a respective sensing frame of a plurality of sensing frames, wherein each of the plurality of sensing frames corresponds to a respective one of a plurality of times, and wherein the perception system performs pipeline processing of the plurality of sensing frames using the classifier MLM.

8. The system of claim 7, wherein the perception system performs pipeline processing of the plurality of sensing frames using the classifier MLM.

9. The system of any preceding claim, wherein the first sensing data comprises at least two of the lidar sensing data, the radar sensing data, or the optical range camera sensing data.

10. A system comprising:
a sensing system of an autonomous vehicle (AV), the sensing system configured to:
obtain a first image of an environment of the AV, wherein the first image comprises at least one of a lidar image a radar image, or an optical range camera image; and
obtain a second image characterizing the environment of the AV, wherein the second image comprises an infrared camera sensing image; and
a perception system of the AV, the perception system comprising:
a detector machine-learning model (MLM) configured to identify, based on at least one of the first image or the second image, a first candidate object and a second candidate object within the environment of the AV; and
a classifier MLM configured to process at least a part of the first image and at least a part of the second image to determine that the first candidate object is a vulnerable road user (VRU) in the environment of the AV and that the second candidate object is a non-VRU.

11. The system of claim 10,
wherein the part of the first image comprises a first cropped portion of the first image and a second cropped portion of the first image, wherein the first cropped portion comprises a depiction of the first candidate object and the second cropped portion comprises a depiction of the second candidate object; and/or
wherein the classifier MLM comprises:
a first neural network (NN) configured to process the first image and to output a first feature vector characteristic of the first image;
a second NN configured to process the second image and to output a second feature vector characteristic of the second image; and
a third NN configured to process an aggregated feature vector and to determine a probability of the first candidate object belonging to a VRU class, wherein the aggregated feature vector comprises the first feature vector and the second feature vector, and wherein to determine that the first candidate object is a VRU, the classifier MLM is to determine that the determined probability is above a threshold probability.

12. A method comprising:
obtaining, using a sensing system of a vehicle, a first sensing data characterizing an environment of the vehicle, wherein the first sensing data comprises at least one of a lidar sensing data, a radar sensing data, or an optical range camera sensing data;
obtaining, using the sensing system of the vehicle, a second sensing data characterizing the environment of the vehicle, wherein the second sensing data comprises an infrared camera sensing data;
processing, by a processing device, the first sensing data and the second sensing data using a classifier machine-learning model (MLM);
obtaining, using an output of the classifier MLM, a classification of one or more vulnerable road users (VRUs) present in the environment of the vehicle; and
causing, by the processing device, a driving path of the vehicle to be modified in view of the obtained classification of the one or more VRUs.

13. The method of claim 12, wherein the classifier MLM comprises a neural network (NN), and wherein processing the first sensing data and the second sensing data comprises:
processing the first sensing data using a first subnetwork of the NN to obtain one or more first feature vectors characteristic of the first sensing data;
processing the second sensing data using a second subnetwork of the NN to obtain one or more second feature vectors characteristic of the second sensing data; and
processing an aggregated feature vector using a fusion subnetwork of the NN, wherein the aggregated feature vector comprises the one or more first feature vectors and the one or more second feature vectors; and
wherein obtaining the classification of one or more VRUs comprises:
using an output of the fusion subnetwork.

14. The method of claim 13,
wherein the fusion subnetwork is a recurrent NN; and/or
wherein the NN further comprises a plurality of classification heads, wherein each of the plurality of classification heads is configured to process the output of the fusion subnetwork and to determine, for at least one object in the environment, a probability of the object belonging to a respective one of a plurality of VRU classes, and wherein the plurality of VRU classes comprises at least one of a pedestrian, a bicyclist, or a motorcyclist; and/or
wherein the first subnetwork is trained using a plurality of sets of at least one of radar training data, lidar training data, or optical camera training data, and wherein the second subnetwork is a copy of the first subnetwork.

15. The method of any of claims 12-14,
wherein obtaining the first sensing data and the second sensing data comprises:
identifying, using a detector MLM, a location of a candidate VRU object within the environment;
cropping a first image of the environment to obtain a portion of the first image depicting the candidate VRU object, wherein the first image comprises at least one of a lidar image a radar image, or an optical range camera image; and
cropping a second image of the environment to obtain a portion of the second image depicting the candidate VRU object, wherein the second image comprises an infrared camera sensing image;
and/or
wherein each of the first sensing data and the second sensing data comprises a plurality of images, each of the plurality of images being associated with a respective sensing frame of a plurality of sensing frames, wherein each of the plurality of sensing frames corresponds to a respective one of a plurality of times, and wherein obtaining, the classification of one or more VRUs comprises:
performing pipeline processing of the plurality of sensing frames using the classifier MLM.
